# EUROPEAN PATENT APPLICATION

(11) **EP 4 808 244 A1**
(43) Date of publication of application: **16.09.2026**
(21) Application number: 24889076.6
(22) Date of filing: 05.11.2024
(51) Int. Cl.: H04W 72/21, H04W 72/1268, H04W 72/0446, H04L 5/00, H04L 5/16

(54) **OPERATION METHOD OF DEVICE IN WIRELESS COMMUNICATION SYSTEM AND DEVICE USING SAME**

(30) Priority: 09.11.2023 US 202363547967 P
(71) Applicant: LG Electronics Inc., Yeongdeungpo-gu Seoul 07336 (KR)
(72) Inventor: YOU, Hyangsun, Seoul 06772 (KR); YANG, Suckchel, Seoul 06772 (KR); KIM, Seonwook, Seoul 06772 (KR); KO, Hyunsoo, Seoul 06772 (KR)
(74) Representative: Mooser, Sebastian Thomas
(86) International application number: PCT/KR2024/017234
(87) International publication number: WO 2025/100888

(57) **Abstract**

Provided are an operation method of a device in a wireless communication system and a device using the method. The method comprises: determining, by a terminal, an uplink control information (UCI) cell for transmitting UCI to a network in a specific time resource; and transmitting, by the terminal, the UCI to the network through the UCI cell in the specific time resource, wherein the UCI cell is determined by giving priority to an half duplex (HD) cell among a full duplex (FD) cell operating in FD in the specific time resource and the HD cell operating in HD in the specific time resource.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR or post-NR wireless communication systems, full duplex (FD) operation can be performed. When performing FD operation, the device can perform reception and transmission simultaneously in a specific time resource. Half duplex (HD) operation differs in that only one of reception and transmission can be performed in a given time resource.

For FD operation, i) some frequency resources in the same time resource can be allocated as downlink subbands and other some frequency resources as uplink subbands (this may be referred to as subband FD, or SBFD (subband-wise full duplex)), or ii) frequency resources that can be used for both downlink reception and uplink transmission in the same time resource can be allocated (this may be referred to as spectrum shared FD, or SSFD (spectrum-sharing full duplex)).

On the other hand, in the case of time/frequency resources configured for a device to operate in FD and/or support FD (which may be referred to as FD resources), a channel environment may be poorer than that of time/frequency resources configured to operate in HD (which may be referred to as HD resources) due to cross-link interference (CLI), self-interference (SI), and the like.

Accordingly, when important control information, for example, uplink control information (UCI), is transmitted through the FD resources, a receiver may fail to successfully receive the UCI due to a poor channel condition.

In particular, when a plurality of cells are configured for the UE, and a cell operating in FD on a time basis (FD cell) and a cell operating in HD (HD cell) are mixed, transmitting important UCI through the FD cell at the corresponding time may cause a reliability problem.

In consideration of the above, there is a need for a method and a device for transmitting UCI in a communication system supporting FD operation.

### DISCLOSURE

### TECHNICAL PROBLEM

The technical problem to be solved by the present disclosure is to provide a method of operating a device in a wireless communication system and a device using the method.

### TECHNICAL SOLUTION

A method of operating a device in a wireless communication system and a device using the method are provided. According to the method, A UE determines a UCI cell for transmitting uplink control information (UCI) to a network in a specific time resource, and the UE transmits the UCI to the network through the UCI cell in the specific time resource. In this case, the UCI cell is determined by giving priority to the HD (half duplex) cell among an FD (full duplex) cell operating in FD in the specific time resource and an HD cell operating in HD in the specific time resource.

In another aspect, a UE, apparatus, and computer-readable medium for executing the above method is provided.

In another aspect, a method of operating a base station and a base station using the method are provided. According to the method of operating the base station, A base station determines a UCI cell for receiving uplink control information (UCI) from a UE in a specific time resource, and the base station receives the UCI from the UE through the UCI cell in the specific time resource. In this case, the UCI cell is determined by giving priority to the HD (half duplex) cell among an FD (full duplex) cell operating in FD in the specific time resource and an HD cell operating in HD in the specific time resource.

### ADVANTAGEOUS EFFECTS

According to the method according to the present disclosure, in a carrier aggregation system in which an FD cell and an HD cell are mixed, it is possible to prevent UCI from being transmitted through an FD cell in which a channel state may be worse than a channel state targeted by the base station. Accordingly, even in a wireless communication system supporting FD operation, UCI can be transmitted reliably.

In addition, when resources of different types, i.e., FD resources and HD resources, coexist, it is possible to clearly define through which cell UCI is transmitted, thereby preventing ambiguity from occurring between transmitting and receiving entities.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 is an example of PUSCH repetition type A.
FIG. 13 is an example of PUSCH repetition type B.
FIG. 14 shows examples of how to apply full duplex (FD) within an intra-carrier.
FIG. 15 shows an example in which a time resource operating in half duplex (HD) and a time resource operating in full duplex (FD) such as SBFD or SSFD exist together.
FIG. 16 shows an example of a first time resource, a second time resource, a first frequency resource and a second frequency resource.
FIG. 17 shows another example of a first time resource, a second time resource, a first frequency resource, and a second frequency resource.
FIG. 18 illustrates a method for transmitting UCI of a UE.
FIG. 19 illustrates a priority rule applicable to UCI transmission.
FIG. 20 illustrates an operation method of a UE in a wireless communication system.
FIG. 21 illustrates the signaling process and operation between a base station and a UE.
FIG. 22 illustrates a wireless device that can be applied the present specification.
FIG. 23 shows an example of a signal processing module structure.
FIG. 24 shows another example of the structure of a signal processing module in a transmission device.
FIG. 25 shows an example of a wireless communication device according to an implementation example of the present disclosure.
FIG. 26 shows another example of a wireless device.
FIG. 27 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

The drawings hereinafter have been prepared to describe specific examples of the present specification. Since specific names of devices or specific names of signals/messages/fields described in the drawings are illustratively presented, technical features of the present specification are not limited to the specific names used in the drawings below.

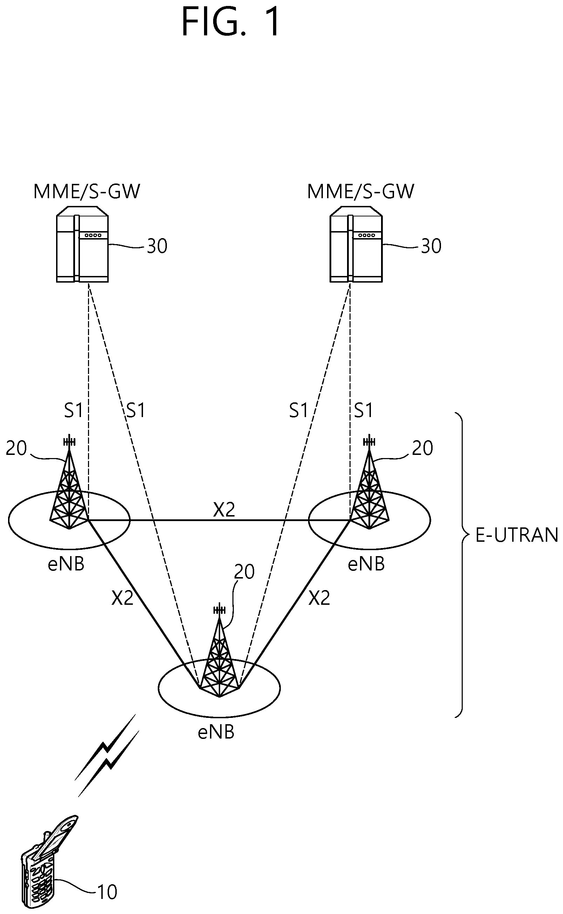

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

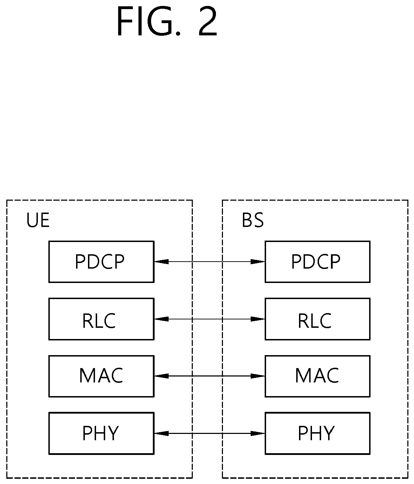

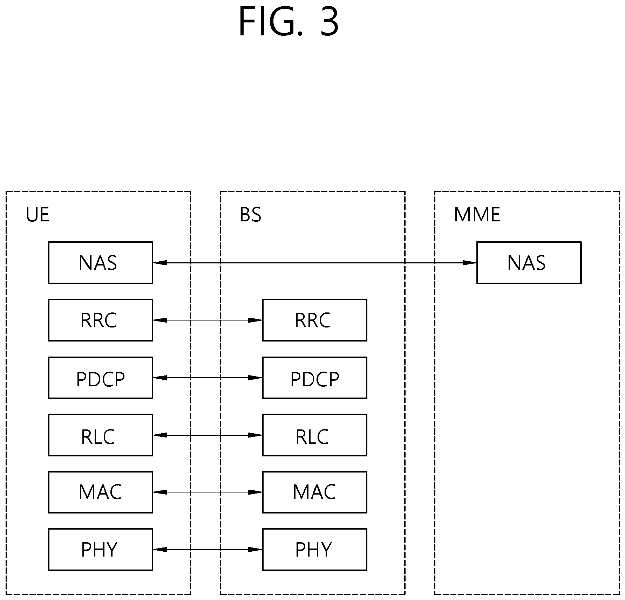

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

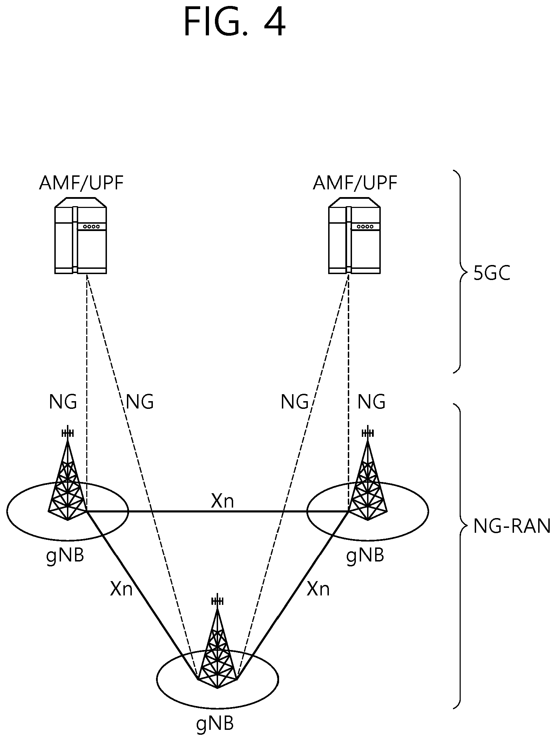

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

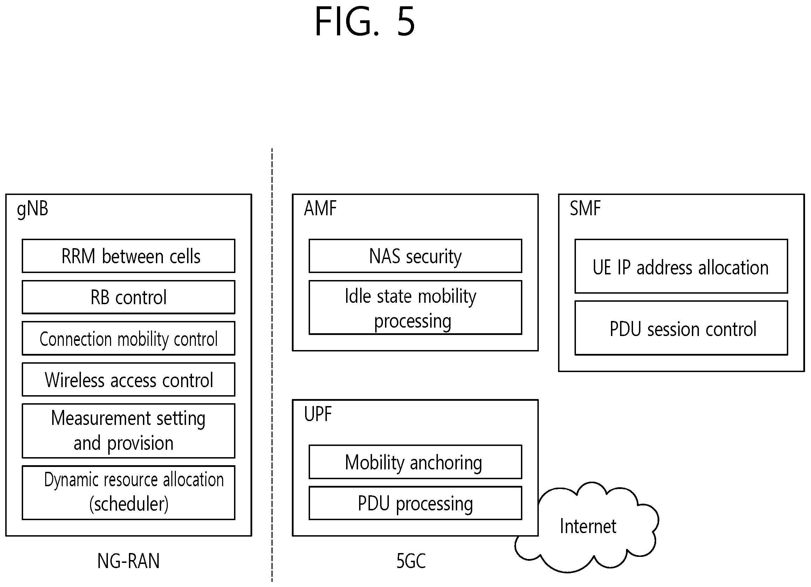

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

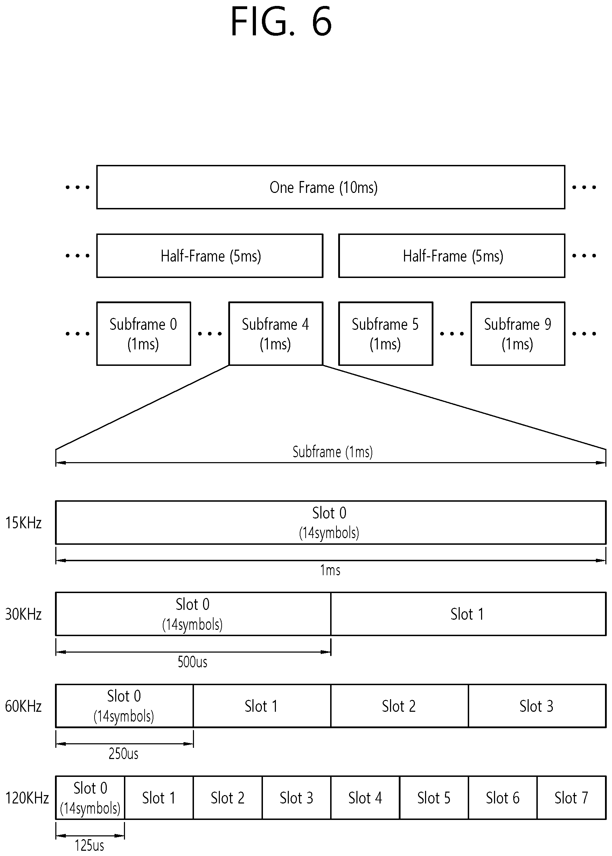

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |
| 5 | 480 | Normal |
| 6 | 960 | Normal |

The following table 2 illustrates the number of slots in a frame (N^{frame,µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| µ | N^{slot}_{symb} | N^{frame, µ}ₛₗₒₜ | N^{subframe, µ}ₛₗₒₜ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

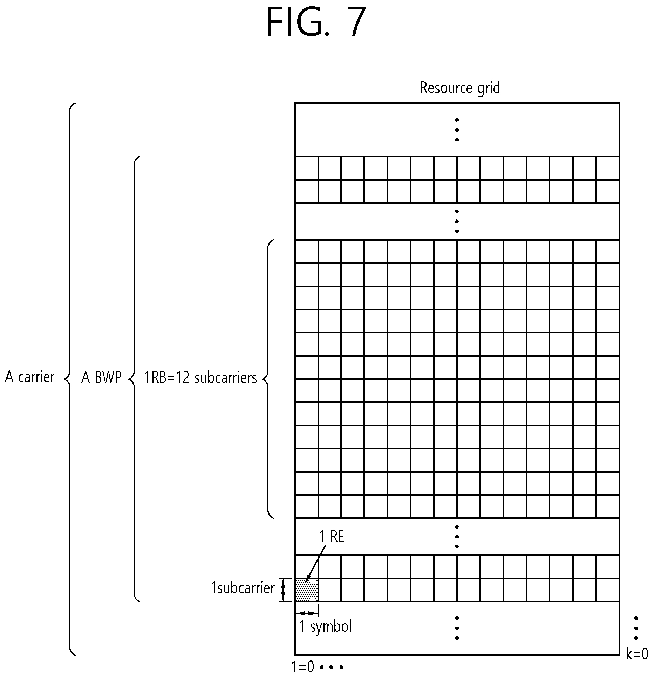

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

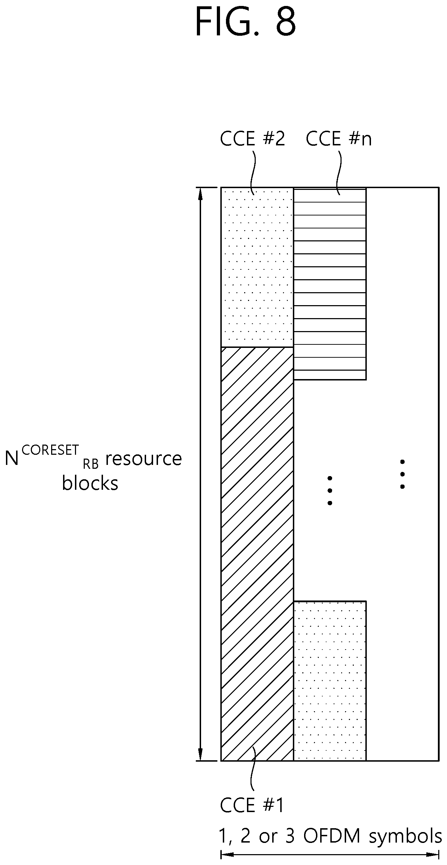

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

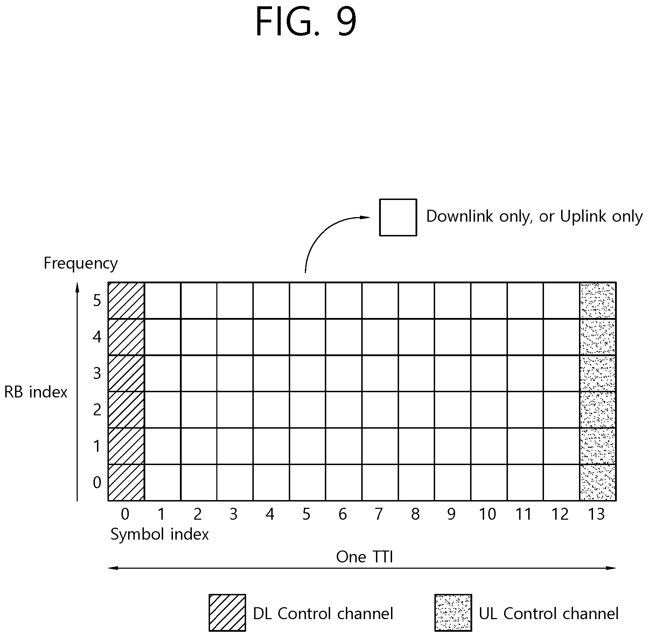

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

FIG. 9 illustrates an example in which a downlink control area is located in a front portion of a TTI, and an uplink control area is located in a rear portion of the TTI. An area between the downlink control area and the uplink control area may be used for transmission of downlink data (DL data) or may be used for transmission of uplink data (UL data). A feature of this structure is that downlink (DL) reception and uplink (UL) transmission are sequentially performed within one subframe/slot, such that DL data may be received and an UL ACK/NACK (Acknowledgement/Not-acknowledgement) may be transmitted within one subframe/slot. As a result, a time taken until data retransmission in a case where a data transmission error occurs is reduced, and thus latency of final data delivery may be minimized.

As described above, in a data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

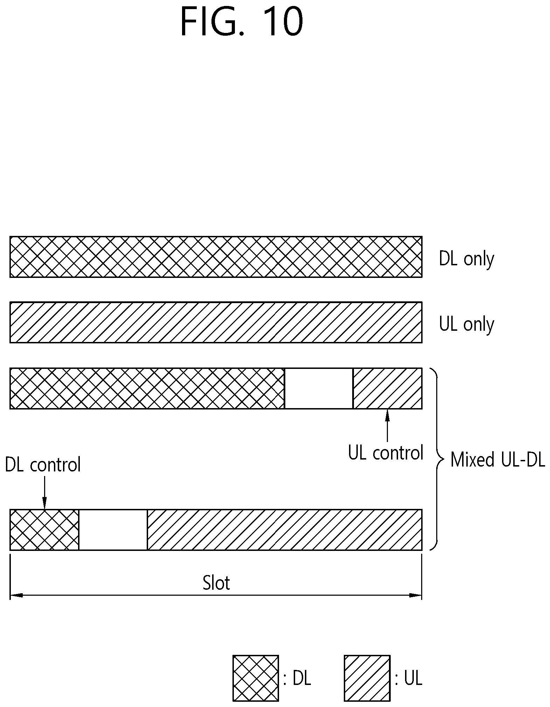

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks (SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORESET in a slot for PDCCH monitoring), 5) the number of slots in which the search space set s exists, 6) the number of PDCCH candidates per CCE aggregation level, 7) information indicating whether the search space set s is a CSS (common search space) or a USS (UE-specific search space), and the like.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

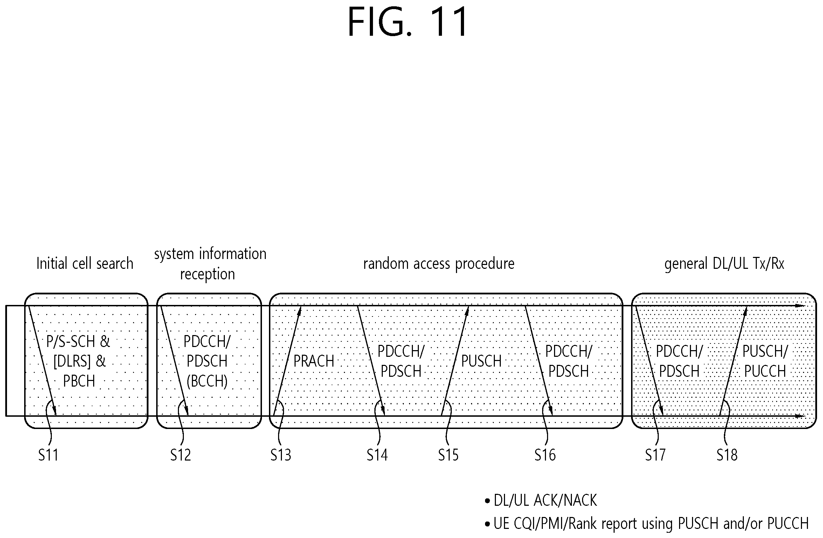

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink shared channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure such as the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

### <PUSCH repetitions>

PUSCH repetition types A and B were introduced in the standard specifications (e.g., NR Rel-15/16). Transmission is performed as follows depending on the PUSCH repetition type.

### 1) PUSCH repetition type A

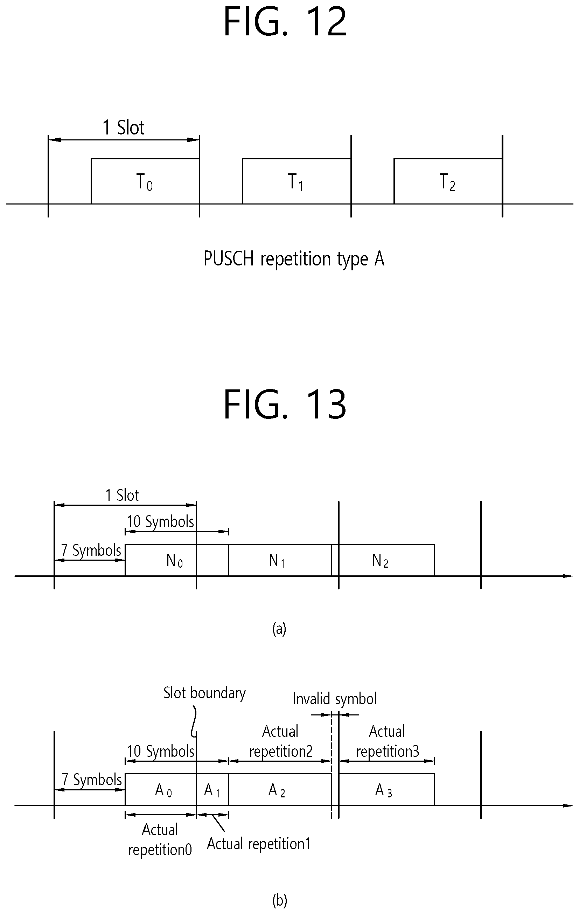

FIG. 12 is an example of PUSCH repetition type A.

Referring to FIG. 12, PUSCH repetition type A is a slot-based PUSCH repetition transmission, and repetition is performed with the same PUSCH transmission start symbol position and PUSCH transmission symbol length for each slot, as illustrated in FIG. 12. At this time, if there is an invalid symbol that cannot be used for PUSCH transmission among the symbol resources that constitute a specific PUSCH repetition, the transmission of the corresponding PUSCH repetition is dropped and not performed. For example, when a total of four PUSCH repetition transmissions of Rep0, Rep1, Rep2, and Rep3 are performed in slots N, N+1, N+2, and N+3 (one PUSCH repetition is transmitted in each slot), if the symbol resources constituting Rep1 include an invalid symbol, the transmission of Rep1 is dropped, and only the transmissions of Rep0, Rep2, and Rep3 are performed. Therefore, the actual number of repetitions performed may be less than the configured number of repetitions.

For PUSCH repetition type A, frequency hopping can be configured for the UE by higher layer parameters. One of two frequency hopping modes can be configured.
i) Frequency hopping within a slot (intra-slot frequency hopping) is applicable to single slot and multi-slot PUSCH transmission.
ii) Inter-slot frequency hopping is applicable to multi-slot PUSCH transmission.

### 2) PUSCH repetition type B

FIG. 13 is an example of PUSCH repetition type B.

Referring to FIG. 13, PUSCH repetition type B is repeated in units of the symbol length in which the actual PUSCH is transmitted. For example, as in (a) of FIG. 13, when PUSCH is transmitted through 10 symbols, PUSCH repetition is performed in units of 10 consecutive symbols. At this time, repetition that determines PUSCH repetition transmission time resources without considering slot boundaries, invalid symbols, etc. is called nominal repetition. (a) of FIG. 13 shows an example in which three nominal repetitions (denoted as N0, N1, and N2) are configured.

However, in the case of actual PUSCH repetition, a single PUSCH cannot be transmitted while including a slot boundary. That is, if a nominal PUSCH transmission includes a slot boundary (e.g., N0, N2 in (a) of FIG. 13), two actual repetitions are performed with the slot boundary as the boundary, as in (b) of FIG. 13. For example, a nominal repetition N0 is performed with two actual repetitions, such as A0, A1, with the slot boundary as the boundary.

Additionally, a single PUSCH transmission can only be performed using consecutive symbols. If an invalid symbol exists in the time resource where a PUSCH repetition should be transmitted, the actual repetition is formed using consecutive symbols with the invalid symbol as the boundary. For example, if symbols #0 to #9 constitute a nominal repetition and symbols #3 to #5 are invalid symbols, symbols #0 to #2 and symbols #6 to #9, excluding the invalid symbol, each constitute an actual repetition.

Invalid symbols may include the following:
i) Downlink symbol configured by semi-static TDD UL-DL configuration,
ii) an invalid symbol pattern configured by RRC (which may be configured by the invalid symbol pattern indicator),
iii) SSB symbol configured by SIB1, SSB symbol configured by 'ServingCellConfigCommon',
iv) Symbol for PDCCH for SIB1,
v) Invalid symbol for DL-UL switching configured by RRC.

If a symbol that cannot be used for PUSCH transmission (e.g., a DL symbol indicated by DCI format 2_0) is included within one actual repetition resource, the corresponding actual repetition transmission is dropped and not performed.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

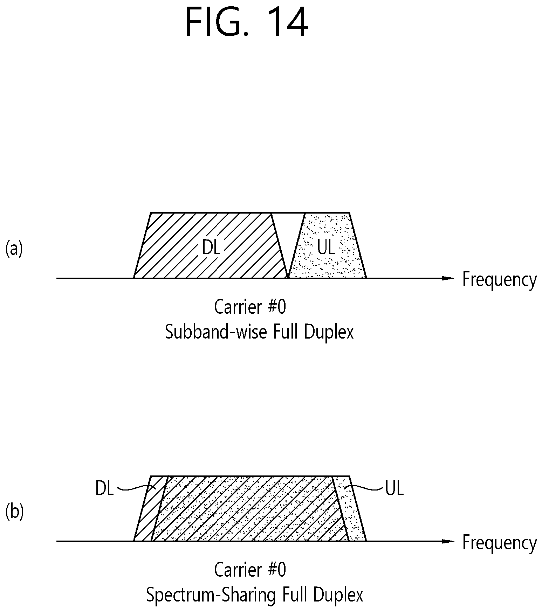

FIG. 14 shows examples of how to apply full duplex within an intra-carrier.

Referring to FIG. 14, the full duplex method includes subband-wise full duplex (hereinafter, it can be called subband full duplex or SBFD) as shown in (a) of FIG. 14 and spectrum sharing full duplex (hereinafter, it can be called SSFD) as shown in (b) of FIG. 14 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

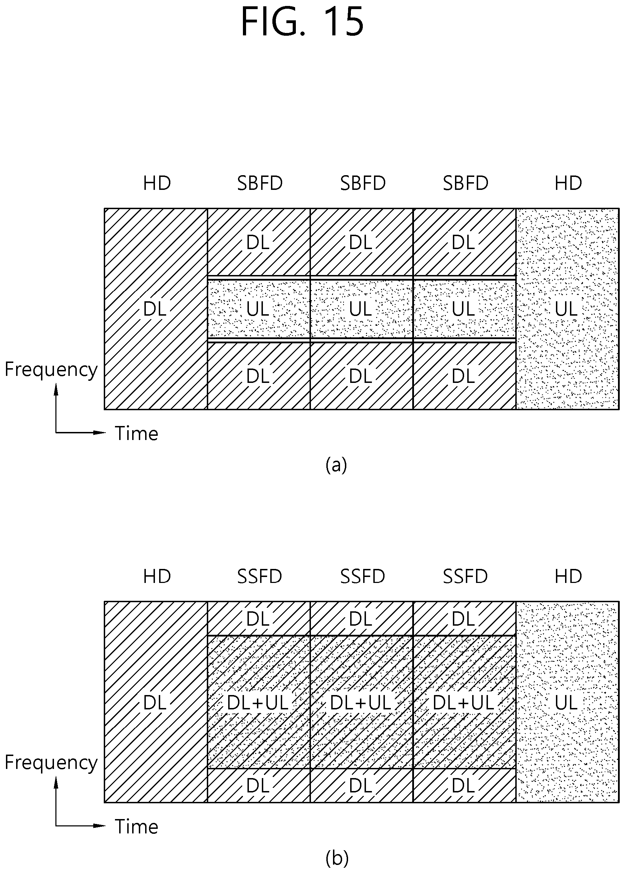

FIG. 15 shows an example in which a time resource operating in half duplex (HD) and a time resource operating in full duplex (FD) such as SBFD or SSFD exist together.

In (a) of FIG. 15, some time resources operating as SBFD are indicated as SBFD, and time resources operating as HD are indicated as HD. In (b) of FIG. 15, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operates as HD is referred to as an HD slot, and a slot resource that operates as SBFD and a slot resource that operates as SSFD are referred to as a SBFD slot and an SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure may be applied to a case in which a base station performs/supports full duplex operation while a UE performs/supports half duplex operation, and may also be applied to a case in which both the base station and the UE perform/support full duplex operation.

### <A. Characteristics of DL/UL time/frequency resources for SBFD and SSFD operation>

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

Through such operations, the network may vary a time resource for performing transmission and reception between a first time resource and a second time resource depending on a type of a signal/channel to be transmitted and received or depending on a UE performing transmission and reception. For example, for important signals/channels (e.g., an SSB and a PRACH) that are less affected by interference and for which transmission and reception performance needs to be improved, resources may be configured such that transmission and reception are performed only in the first time resource operating only in half duplex. Through this, transmission and reception performance of the signals/channels may be maintained while applying full duplex to a cell. Alternatively, in a case of a UE that is significantly affected by CLI (cross link interference) and thus is unable to properly perform transmission and reception when operating in full duplex in the second time resource, transmission and reception performance for the UE may be ensured by configuring resources such that transmission and reception are performed in the first time resource.

The UE/base station performs a DL operation or an UL operation in all frequency resources constituting an entire system bandwidth in a first time resource in which an HD operation is performed. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the UE/base station performs DL operations through all or part of the frequency resources (first frequency resources) among the frequency resources that constitute the system BW of the cell, and performs UL operations through all or part of the frequency resources (second frequency resources).

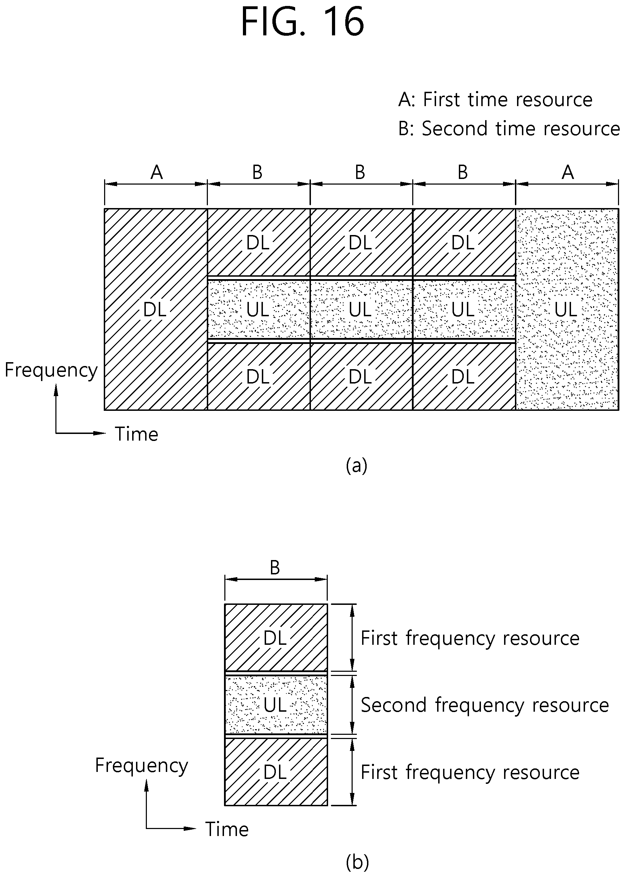

FIG. 16 shows examples of a first time resource, a second time resource, a first frequency resource, and a second frequency resource.

Referring to (a) of FIG. 16, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 16, in the second time resource, the frequency resource operating as DL corresponds to the above-described first frequency resource, and the frequency resource operating as UL corresponds to the above-described second frequency resource.

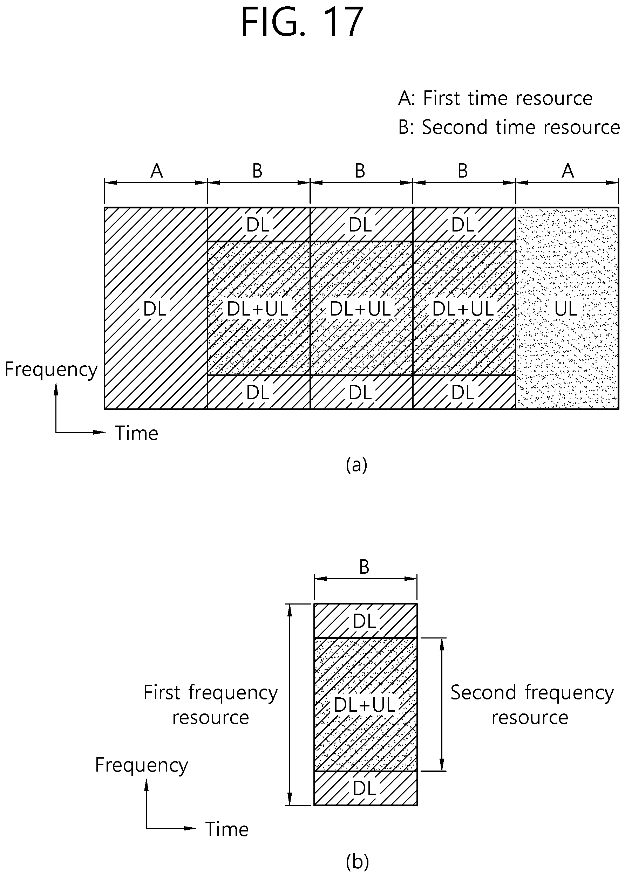

FIG. 17 shows another example of a first time resource, a second time resource, a first frequency resource, and a second frequency resource.

Referring to (a) of FIG. 17, in the first time resource (denoted by A), the device operates as a half-duplex. In the second time resource (labelled B), the device may operate, for example, as an SSFD. In the first time resource, the resource denoted DL corresponds to the 1-1 time resource described above, and the resource denoted UL corresponds to the 1-2 time resource described above.

Referring to (b) of FIG. 17, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.
4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

Through the operations described above, the base station may perform a half duplex operation in which only one of DL transmission or UL reception is performed in all frequency resources constituting the cell in a first time resource, and may perform a full duplex operation in which DL transmission is performed through first frequency resources within frequency resources constituting the cell and, simultaneously, UL reception is performed through second frequency resources within the frequency resources constituting the cell in a second time resource.

The network determines the 'first time resource' and 'second time resource', and the 'first frequency resource' and 'second frequency resource' as described above, and provides all or part of the corresponding information to the UE. The network may perform DL transmission to the UE in a 1-1 time resource within a first time resource and in first frequency resources within a second time resource, and may perform UL reception from the UE in a 1-2 time resource within the first time resource and in second frequency resources within the second time resource.

The UE may be provided with all or some of information regarding the above-described 'first time resource' and 'second time resource' and 'first frequency resources' and 'second frequency resources' from the network, and may determine positions of the resources. The UE may perform DL reception from the network through all or some of a 1-1 time resource within a first time resource and first frequency resources within a second time resource, and may perform UL transmission to the network in a 1-2 time resource within the first time resource and second frequency resources within the second time resource.

Meanwhile, in a TDD carrier of the legacy NR, a base station performs only an operation for one of downlink or uplink in a specific time resource. In this case, in a time resource in which an SSB is transmitted, the base station always operates in downlink.

In a case of a UE operating in the legacy TDD, the following is assumed for symbols in which an SSB (SS/PBCH) is transmitted.
1) An SS/PBCH transmission symbol may not be configured as uplink by a TDD configuration (e.g., 'TDD-UL-DL-ConfigCommon' and/or 'TDD-UL-DL-ConfigDedicated').
2) The SS/PBCH transmission symbol may not be configured as uplink in SFI (slot format indication) by a DCI format 2_0.
3) When an SS/PBCH is transmitted in a symbol configured as flexible by a TDD configuration (e.g., 'TDD-UL-DL-ConfigCommon' and/or 'TDD-UL-DL-ConfigDedicated'), when uplink transmission of the UE overlaps the SS/PBCH symbol, the uplink transmission is not performed. In a case of an SRS, when the SRS overlaps the SS/PBCH symbol in a flexible symbol, SRS transmission is not performed in the overlapped symbol(s).

Meanwhile, in FD such as SBFD and SSFD, both DL resources and UL resources may exist in the same time resource from a cell perspective. Accordingly, the base station may perform uplink reception while performing downlink transmission. Therefore, even when an SS/PBCH is transmitted in a time resource in which a cell performs an FD operation, the base station may perform uplink reception while transmitting the SS/PBCH.

Meanwhile, in the current standard specification, the UE is unable to perform uplink transmission in a symbol resource in which the SS/PBCH is transmitted. That is, in an SS/PBCH transmission time resource of the base station, the UE is unable to perform the FD operation.

When a specific time resource is configured as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbol, it may consider a fallback to TDD operation where DL or UL operation is performed over the full band, rather than SBFD operation over DL/UL subbands.

In the present disclosure, description is provided assuming an SBFD operation in which a cell simultaneously performs DL and UL by using different frequency resources (e.g., subbands) in the same time resource. However, the disclosure of the present disclosure may be applied even when the cell performs an SSFD operation.

In a wireless communication system, i) a base station may perform a full duplex operation and a UE may perform a half duplex operation, or ii) the base station may perform the half duplex operation and the UE may perform the full duplex operation. Alternatively, iii) both the base station and the UE may support the full duplex operation.

A UE knowing that the base station is capable of performing the full duplex operation may be referred to hereinafter as an FD-aware UE. A UE knowing that the base station is capable of performing an SBFD operation may be referred to hereinafter as an SBFD-aware UE. A UE knowing that the base station is capable of performing an SSFD operation may be referred to hereinafter as an SSFD-aware UE.

When the base station supports both performing the half duplex operation and performing the full duplex operation, the base station may inform the UE of information regarding resources (time and/or frequency) in which half duplex and full duplex may be performed (or are expected to be performed, or are to be performed).

When the base station is a full duplex base station capable of performing an SSFD operation, UL reception may be simultaneously possible in some and/or all frequency resources in which DL transmission of the base station is possible. That is, in some frequency resources, not only DL transmission/reception but also UL reception/transmission may be possible. In this case, information regarding frequency resources in which SSFD is possible may be delivered to the UE. Also, information regarding time resources in which SSFD is possible may be delivered to the UE.

In a case of a full duplex UE, UL transmission may be simultaneously possible in some and/or all frequency resources in which DL reception of the UE is possible. In the present disclosure, a UE performing a half duplex operation may be referred to as an HD UE, and a UE capable of performing (or performing) a full duplex operation may be referred to as an FD UE.

When the base station performs a full duplex operation such as SBFD and SSFD, the base station may perform an SSFD operation and/or an SBFD operation only for some time/frequency resources. When an SBFD-aware UE and/or an SSFD-aware UE knows time/frequency resources in which the cell performs the SSFD operation and/or the SBFD operation, the UE may perform operations differently according to resources in which the cell operates in half duplex (HD), resources in which the cell operates in SBFD, and resources in which the cell operates in SSFD. For example, the UE may perform transmission and reception by determining, differently according to HD resources, SBFD resources, and SSFD resources, time/frequency resources in which the UE performs reception of a DL signal/channel and/or transmission of an UL signal/channel.

The base station may perform a half duplex operation in which only one of DL transmission or UL reception is performed in all frequency resources constituting the cell in time resources operating in HD, and may perform a full duplex operation in which DL transmission is performed through first frequency resources (i.e., DL subband resources) within frequency resources constituting the cell and, simultaneously, UL reception is performed through second frequency resources (i.e., UL subband resources) within the frequency resources constituting the cell in time resources operating in SBFD and SSFD.

For this purpose, the base station determines time resources corresponding to a first time resource (i.e., an HD symbol) and a second time resource (i.e., an FD symbol), and transmits, to the UE, configuration information regarding the first time resource (i.e., the HD symbol) and/or the second time resource (i.e., the FD symbol). The FD symbol may include both an SBFD symbol and an SSFD symbol. More specifically, the base station may determine/decide time resources corresponding to the HD symbol, the SBFD symbol, and/or the SSFD symbol, and may transmit, to the UE, configuration information regarding the HD symbol, the SBFD symbol, and/or the SSFD symbol.

In this case, DL subband resources and/or UL subband resources may be configured differently in time resources operating in SBFD and time resources operating in SSFD. In time resources operating in SBFD, DL subband resources and UL subband resources are configured to not overlap each other. In contrast, in time resources operating in SSFD, DL subband resources and UL subband resources may be configured to overlap each other. The DL subband/UL subband resources may be configured with some frequency resources of a system bandwidth or may be configured with all frequency resources.

The UE receives configuration information regarding the HD symbol, the SBFD symbol, and/or the SSFD symbol from the network, and determines positions of the HD symbol, the SBFD symbol, and/or the SSFD symbol. In this case, in the HD symbol, the UE performs DL reception (UL transmission) through all frequency resources configured for the UE to operate DL reception (UL transmission). Also, in the SBFD symbol and/or the SSFD symbol, the UE performs DL reception (UL transmission) through DL subband resources (UL subband resources) that are the same as or limited (smaller) than frequency resources in which the UE performs DL reception (UL transmission) in the HD symbol. In this case, even when frequency resources not corresponding to the DL subband resources (UL subband resources) are configured for DL reception (UL transmission) in the SBFD symbol and/or the SSFD symbol resources, the UE does not perform DL reception (UL transmission) in frequency resources not corresponding to the DL subband resources (UL subband resources).

Now, a method in which a device determines a time resource (e.g., a slot) for transmitting UCI (e.g., HARQ-ACK, SR (scheduling request), CSI (channel state information), etc.) and transmits the UCI in the determined time resource will be described. For convenience, HARQ-ACK will be described as an example of the UCI.

The UE may determine a slot position for feeding back HARQ-ACK information for PDSCH reception as follows.

For SPS PDSCH reception ending in a DL slot n_{D}, the UE transmits HARQ-ACK information for the SPS PDSCH through a PUCCH of a UL slot n+k. Here, k is provided by a 'PDSCH-to-HARQ feedback timing indicator (PDSCH-to-HARQ_feedback timing indicator)' field (if present) of a DCI format activating the SPS PDSCH reception.

If the UE receives a DCI format activating SPS PDSCH reception ending in the DL slot n_{D} or scheduling PDSCH reception, and the DCI format does not include a 'PDSCH-to-HARQ feedback timing indicator (PDSCH-to-HARQ_feedback timing indicator)', the UE transmits/provides HARQ-ACK information in PUCCH transmission of the UL slot n+k, where k is provided by a higher layer parameter 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'.

If the UE receives a DCI format scheduling PDSCH receptions ending in the DL slot n_{D}, or detects a DCI format generating HARQ-ACK information bits but not scheduling PDSCH reception through PDCCH reception ending in the DL slot n_{D}, the UE transmits/provides the corresponding HARQ-ACK information in PUCCH transmission of the UL slot n+k. Here, k is the number of slots, and is indicated by a 'PDSCH-to-HARQ feedback timing indicator (PDSCH-to-HARQ_feedback timing indicator)' field (if present) of the DCI format, or is provided by a higher layer parameter 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'.

In the present disclosure, in intra-carrier full duplex operation, a method of determining a PUSCH/PUCCH resource in which the UE transmits UCI will be described in consideration of a resource in which a cell operates in FD and a resource in which the cell operates in HD. That is, in the method according to the present disclosure, the method of the existing standard specification may be changed in consideration of the time resource in which the cell operates in FD and the time resource in which the cell operates in HD.

For a cell operating in FD, the cell may operate in half duplex (HD) or full duplex (FD) depending on the time resource. In the case of time/frequency resources operating in full duplex (FD), a channel environment may be poorer than that of resources operating in half duplex (HD) due to cross-link interference (CLI), self-interference (SI), and the like. Therefore, when UCI transmission through PUCCH or PUSCH is performed in FD resources based on a channel environment in HD resources, the UCI may not be properly transmitted.

Accordingly, in the present disclosure, the UE may transmit UCI through a PUSCH/PUCCH transmitted in a time resource in which a cell operates in HD, rather than through a PUSCH/PUCCH transmitted in a resource in which the cell operates in FD.

Considering that the UE may perform FD operation and whether the UE operates in HD/FD may vary for each time resource, in the present disclosure, a 'resource in which a cell operates in HD' and a 'resource in which a cell operates in FD' may be interpreted as being replaced by a 'resource in which a UE operates in HD' and a 'resource in which a UE operates in FD', respectively.

In the following, considering a carrier aggregation (CA) environment, a method of determining a UCI transmission resource, which enables a PUSCH/PUCCH resource through which a UE transmits uplink control information (UCI) to be an HD resource, will be described.

### <Proposal 1. Method of determining a PUCCH resource through which UCI is transmitted>

When a UE transmits UCI through a PUCCH in a CA environment, the UE basically transmits the UCI through a specific PUCCH resource present on a PCell(primary cell).

Further, depending on a capability in URLLC, the UE may determine/change a cell through which the UCI is transmitted through the PUCCH from among a PCell and a PUCCH-sSCell.

At this time, specifically, based on DCI indication, a cell through which the UCI is transmitted may be dynamically changed/determined between the PCell and the PUCCH-sSCell. And/or, a cell through which the UCI is transmitted may be changed/determined from among the PCell and the PUCCH-sSCell according to a semi-static switching pattern configured based on RRC signaling.

An RRC message related with an operation of switching a PUCCH cell through which the UE transmits the UCI may be transmitted, for example, by being included in a 'PhysicalCellGroupConfig IE' as follows.

Table 5 illustrates a part of the 'PhysicalCellGroupConfig IE'.

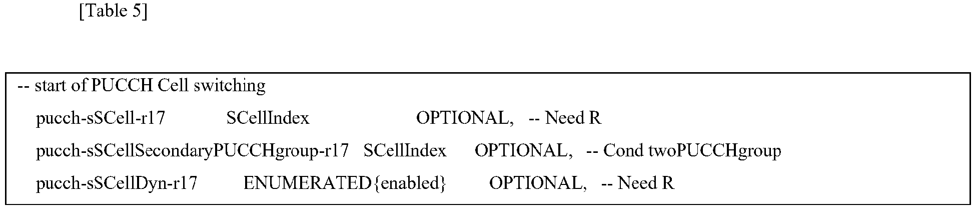

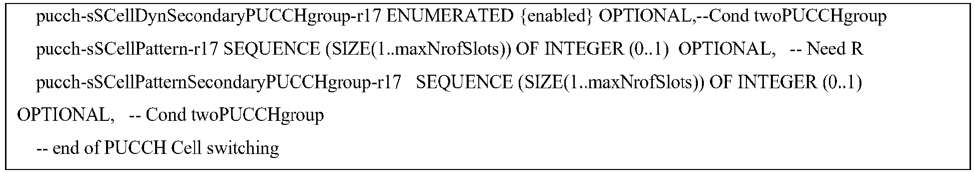

In Table 5, 'pucch-sSCell', 'pucch-sSCellSecondaryPUCCHgroup' indicate an alternative PUCCH cell for PUCCH cell switching in a primary PUCCH group and a secondary PUCCH group, respectively. In case of the primary PUCCH group, a cell is configured for cells on an SpCell, and in case of the secondary PUCCH group, a cell is configured as a cell on a PUCCH SCell.

If 'pucch-sSCellDyn', 'pucch-sSCellDynsecondaryPUCCHgroup' are configured, PUCCH cell switching is enabled for the primary PUCCH group and the secondary PUCCH group, respectively, based on dynamic indication of DCI format 1_1.

If 'pucch-sSCellPattern', 'pucch-sSCellPatternSecondaryPUCCHgroup' are configured, the UE applies semi-static PUCCH cell switching for the primary PUCCH group and the secondary PUCCH group, respectively, by using a time-domain pattern of applicable PUCCH cells indicated by the fields.

When the UE is configured with a cell operating in FD as a PCell and/or an SCell, the UE may determine/judge a cell through which the UE transmits UCI through a PUCCH as follows.

The UE may determine/judge a cell through which the UE transmits UCI through the PUCCH by giving priority to a cell operating in HD from among the PCell and the PUCCH-sSCell. That is, whether a cell operates in HD or operates in FD is additionally considered in a method of determining a cell for transmitting UCI in an existing standard specification.

Specifically, if it is determined that the UE should transmit the UCI through the PUCCH in slot m according to the existing standard specification, i) if the PCell operates in HD in slot m and the PUCCH-sSCell operates in FD, the UE transmits the UCI through the PUCCH resource in the PCell. ii) Alternatively, if the PCell operates in FD in slot m and the PUCCH-sSCell operates in HD, the UE transmits the UCI through the PUCCH resource in the PUCCH-sSCell. iii) In other cases, the UE determines a cell through which the UCI is transmitted from among the PCell and the PUCCH-sSCell based on the existing standard specification.

Expressing this differently, if the UE is configured/determined to transmit UCI through the PUCCH in slot m according to the existing standard specification, for example, although the UE determines that the UE will transmit the UCI through the PUCCH-sSCell in slot m based on an existing operation, if slot m is an FD slot in the PUCCH-sSCell and is an HD slot in the PCell, the UE determines the PCell as a cell through which the UCI is transmitted through the PUCCH.

As another example, although the UE determines that the UE will transmit the UCI through the PUCCH-sSCell in slot m based on configuration of the semi-static switching pattern of the PUCCH cell, if slot m is an FD slot in the PUCCH-sSCell and is an HD slot in the PCell, the UE exceptionally does not temporarily follow the semi-static PUCCH cell switching pattern configuration and determines the PCell as a cell through which the UCI is transmitted through the PUCCH. The switching pattern may be configured, for example, for the UE by a higher layer parameter 'pucch-sSCellPattern' from the base station.

Although the UE determines that the UE will transmit the UCI through the PCell in slot m based on an existing operation (that is, an operation according to an existing standard specification), if slot m is an FD slot in the PCell and is an HD slot in the PUCCH-sSCell, the UE determines the PUCCH-sSCell as a cell through which the UCI is transmitted through the PUCCH.

For example, although the UE determines that the UE will transmit the UCI through the PCell in slot m based on configuration of the semi-static switching pattern of the PUCCH cell, if slot m is an HD slot in the PUCCH-sSCell and is an FD slot in the PCell, the UE exceptionally does not temporarily follow the semi-static PUCCH cell switching pattern configuration and determines the PUCCH-sSCell as a cell through which the UCI is transmitted through the PUCCH. The switching pattern may be configured, for example, for the UE by a higher layer parameter 'pucch-sSCellPattern' from the base station.

In Proposal 1, an HD slot and an FD slot may more specifically mean the following.

1) An HD slot may mean a slot in which all symbols in the slot are symbols operating in HD. On the other hand, an FD slot may mean a slot in which all symbols in the slot are symbols operating in FD, or may mean a slot in which at least one symbol in the slot is a symbol operating in FD.

2) Alternatively, an HD slot may mean a slot in which symbol resources constituting a PUCCH resource in the slot are all composed of symbols operating in HD. On the other hand, an FD slot may mean a slot in which symbol resources constituting a PUCCH resource in the slot are all symbols operating in FD, or may mean a slot in which, with respect to symbol resources through which the PUCCH is transmitted in the slot, at least one symbol is a symbol operating in FD.

In the present disclosure, a symbol/slot operating in HD may mean a symbol/slot for which the UE is semi-statically configured by the base station such that a cell operates in HD. In the present disclosure, a symbol/slot operating in FD may mean a symbol/slot for which the UE is semi-statically configured by the base station such that a cell operates in FD. Thereafter, if the UE is dynamically indicated by the base station that a specific symbol/slot resource operates in HD or FD, the UE may determine a slot through which the UCI is transmitted by considering only semi-statically indicated information.

Additionally, the above proposal may be applied only when the UE changes/determines a cell through which the UCI is transmitted from among the PCell and the PUCCH-sSCell according to a semi-static switching pattern. Such a switching pattern may be configured, for example, for the UE by a higher layer parameter 'pucch-sSCellPattern' from the base station.

Additionally, the proposed method may be applied when all or some of the following conditions are satisfied.

1) The UE may apply the proposal only when whether the operation is applied is indicated by the network through RRC, MAC-CE, DCI signaling, or the like.

2) The UE may differently apply the proposed method according to transmitted UCI information. For example, in case of HARQ-ACK and/or SR information, the UE may transmit the same as an existing operation, and in case of other information, the UE may transmit by applying the proposal according to the present disclosure. This is because, in case of HARQ-ACK information, a transmission bit size is small, and thus the HARQ-ACK information is likely to be transmitted relatively reliably even in an FD operation resource.

Alternatively, for example, in case of HARQ-ACK information, the method according to the present disclosure may be applied, and in case of the remaining information, transmission may be performed as in an existing operation. Alternatively, for example, in case of both HARQ-ACK information and the remaining information, the method according to the present disclosure may be applied for transmission. In case of HARQ-ACK information, since transmission reliability is important, there is a high need for relatively reliable transmission through an HD operation resource.

The UE may differently apply the proposed method according to a bit size/length of transmitted UCI information. For example, if a bit length constituting the UCI to be transmitted by the UE is equal to or less than L bits, the UE may transmit by applying the method according to the present disclosure, and if the bit length is greater than L bits, the UE may transmit as in an existing method. The value L may be fixed as a specific value and defined in a standard specification. Alternatively, the value of L may be a value indicated for the UE by the network through RRC, MAC-CE, and/or DCI signaling, or the like.

According to the proposal of the present disclosure, the UE may operate as follows.

The UE determines a time resource in which each serving cell operates in HD and a time resource in which each serving cell operates in FD based on configuration information from the base station.

Thereafter, if the UE determines that the UE transmits UCI through the PUCCH in a specific slot m (or determines that the UE is configured to operate in such a manner), the UE determines, by using the proposed method of the present disclosure, a cell performing the UCI transmission according to whether slot m in each serving cell is an HD slot or an FD slot.

Thereafter, the UE transmits the UCI to the base station in slot m by using a PUCCH resource present in the cell determined as described above.

According to the proposal of the present disclosure, the base station may operate as follows.

The base station determines/configures, for each serving cell, a resource in which a cell operates in FD and/or a resource in which a cell operates in HD, and signals, to the UE, information on a time resource in which the cell operates in HD and/or a time resource in which the cell operates in FD.

The base station requests UCI information, such as HARQ-ACK, CSI, and SR, from the UE.

When the base station receives the UCI information from the UE through the PUCCH in slot m, the base station determines, by using the proposed method as described above, a cell receiving the UCI (that is, a cell in which the UE performs UCI transmission) according to whether slot m of each serving cell is an HD slot or an FD slot.

Thereafter, the base station receives the UCI from the UE in slot m through a PUCCH resource present in the cell determined as described above.

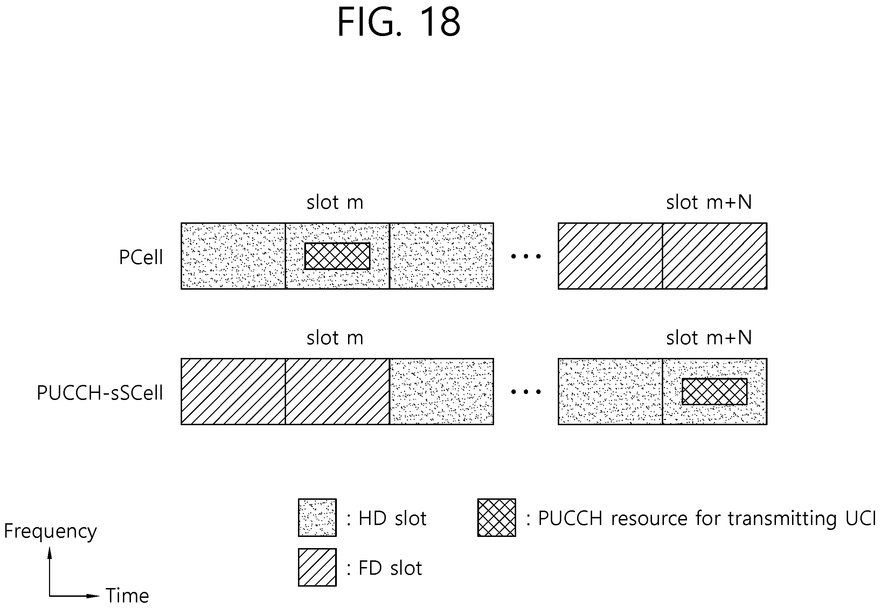

FIG. 18 illustrates a UCI transmission method of a UE.

Referring to FIG. 18, for example, a primary cell (PCell) and a PUCCH-sSCell(PUCCH switching SCell) may be configured for the UE.

The primary cell (PCell) may be a cell performing initial access. If there are an MCG (master cell group) and an SCG (secondary cell group), the PCell may be a cell performing initial access within the MCG.

In FIG. 18, a PCell is illustrated, but the PCell may be replaced with a PSCell or a PUCCH SCell. A PSCell (primary secondary cell) may be a primary cell within the SCG. That is, the PSCell may be a cell performing initial access within the SCG. A PUCCH SCell is a secondary cell in which a PUCCH is configured. A PCell and a PSCell may be referred to as an SpCell(Special Cell).

A PUCCH sSCell (PUCCH switching SCell) is a secondary cell that may be used for PUCCH transmission in addition to a PCell/PSCell/PUCCH SCell, and may be provided for each PUCCH group. Which cell among the PCell/PSCell/PUCCH SCell or the PUCCH sSCell can perform the PUCCH transmission, that is, which cell is an applicable cell for the PUCCH transmission at a specific time point, may be defined based on i) a semi-static time-domain pattern of an applicable cell for physical uplink control channel (PUCCH) transmission configured by a higher layer or ii) dynamic indication of a cell for PUCCH transmission through a PDCCH scheduling the PUCCH transmission. This may be referred to as PUCCH cell switching. In order to reduce HARQ-ACK feedback delay for TDD operation in a URLLC service, PUCCH cell switching for TDD cells may be supported.

The PUCCH cell switching may be applied to all UCI types in case of i), that is, when a time-domain pattern configured by a higher layer is used, but in case of ii), that is, dynamic indication of a cell for PUCCH transmission through the PDCCH scheduling the PUCCH transmission, the PUCCH cell switching may be applied only to HARQ feedback.

Assume that, based on the PUCCH cell switching, the UE is configured to transmit UCI through the PCell in slot m. In this case, according to the present disclosure, if slot m of the PCell is an HD slot (more specifically, a UL slot) (in other words, if the PCell operates in HD in slot m), the UCI is transmitted through the PUCCH resource of slot m of the PCell.

On the other hand, assume that, based on the PUCCH cell switching, the UE is configured to transmit UCI through the PCell in slot m+N. In this case, according to the present disclosure, if slot m of the PCell is an FD slot (in other words, if the PCell operates in FD in slot m) and slot m of the PUCCH-sSCell is an HD slot (in other words, if the PUCCH-sSCell operates in HD in slot m), the UCI is transmitted through the PUCCH resource of slot m of the PUCCH-sSCell.

### <Proposal 2. Method of determining a PUSCH resource through which UCI is transmitted>

When the UE transmits UCI in a specific slot, the UE may first determine, as a PUCCH resource through which the UCI is transmitted (that is, PUCCH resource A), a specific PUCCH resource on a PCell or a PUCCH-sSCell.

If there is one or more PUSCHs overlapping the PUCCH resource A on a time axis, the UE selects a specific one PUSCH transmission from among the PUSCH transmissions according to a specific priority rule, and multiplexes and transmits the UCI on the PUSCH transmission. In this case, UCI transmission through the PUCCH resource A is not performed.

The plurality of PUSCH transmissions may be PUSCHs transmitted to different cells, or may be PUSCHs transmitted by being TDMed within the same cell. A priority rule according to which the UE determines one PUSCH transmission on which the UE multiplexes and transmits the UCI from among the plurality of PUSCH transmissions will be described.

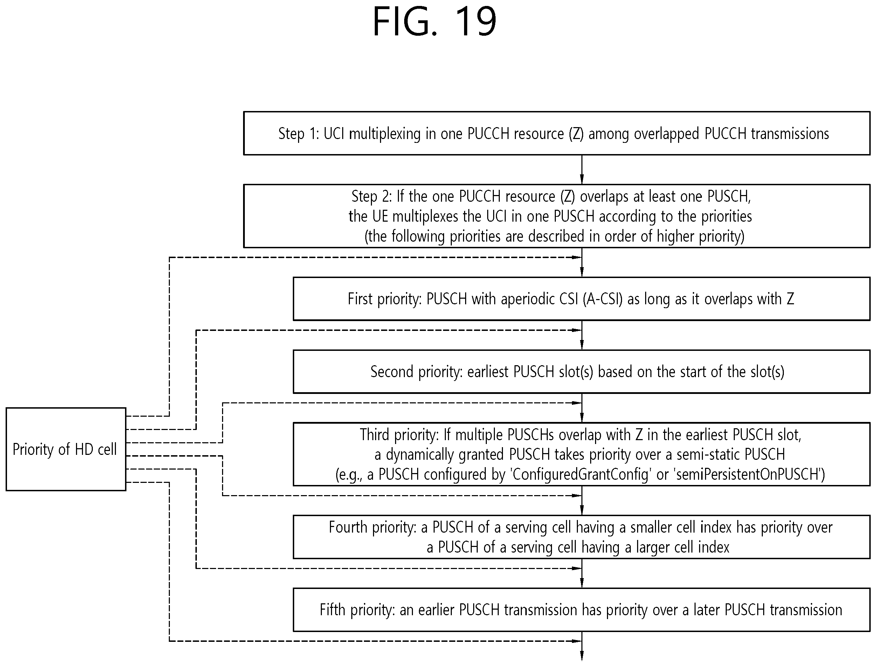

FIG. 19 illustrates a priority rule applicable to UCI transmission.

Referring to FIG. 19, in case of UCI multiplexing within a PUSCH or PUCCH group, the following two steps may be performed. A device first performs a first step and then performs a second step.

Step 1: In overlapped PUCCH transmissions, UCI is multiplexed into one PUCCH resource (this is referred to as resource Z). This step may be performed for each PUCCH slot.

Step 2: If Z overlaps at least one PUSCH, UCI not including SR is multiplexed into one PUSCH according to priorities listed below (described in sequence from higher priority to lower priority).

First priority: a PUSCH with aperiodic CSI overlapping Z (PUSCH with A-CSI as long as it overlaps with Z).

Second priority: earliest PUSCH slot(s) based on the start of the slot(s).

If there are still multiple PUSCHs overlapping Z in the earliest PUSCH slot, the following priority is followed (in sequence from higher priority to lower priority).

Third priority: dynamic grant PUSCHs > PUSCHs configured by respective ConfiguredGrantConfig or semiPersistentOnPUSCH. That is, a dynamic grant PUSCH has priority over a semi-static PUSCH (a PUSCH configured by 'ConfiguredGrantConfig' or 'semiPersistentOnPUSCH').

Fourth priority: PUSCHs on serving cell with smaller serving cell index > PUSCHs on serving cell with larger serving cell index.

Fifth priority: Earlier PUSCH transmission > later PUSCH transmission.

In the present disclosure, among determination steps according to these priorities, a determination step according to priority of an HD cell is additionally added before a specific step. For example, the determination step according to priority of the HD cell may be determined prior to the first priority, or may be determined prior to the third priority or the fourth priority. However, this is merely an example, and the determination step according to priority of the HD cell may be located before or after a specific priority step, as illustrated in FIG. 19.

In the present disclosure, a step of determining/judging a PUSCH on which the UE multiplexes and transmits UCI by giving priority to a PUSCH transmitted in a cell operating in HD from among a plurality of serving cells may be added.

That is, in the present disclosure, when the UE is configured with a cell operating in FD as a PCell and/or an SCell, and the UE can transmit PUSCH in a plurality of serving cells, it is proposed that the UE determine/judge a PUSCH through which the UE transmits UCI as follows.

Specifically, priority of the HD cell means that, if the UE is configured to transmit UCI in slot m and there are a plurality of PUSCH transmissions overlapping on a time axis with a PUCCH resource through which the UE transmits the UCI, in order to determine a PUSCH on which the UE multiplexes and transmits the UCI, the UE gives priority to a PUSCH on serving cell with HD operation/HD slot (in slot m) over a PUSCH on serving cell with FD operation/FD slot (in slot m). That is, the UE determines, as a PUSCH on which the UE multiplexes and transmits the UCI, a PUSCH transmitted in a serving cell for which slot m is an HD slot in preference to a PUSCH transmitted in a serving cell for which slot m is an FD slot.

This rule may be applied before/after a specific one of the plurality of priority steps (the first priority to the fifth priority) corresponding to Step 2, that is, for determining one PUSCH transmission on which the UCI is multiplexed and transmitted.

As an example, a PUSCH transmitted in a serving cell that is an HD slot may always be prioritized over a PUSCH transmitted in a serving cell that is an FD slot. That is, the rule (that is, priority of the HD cell) may be applied before the 'first priority'.

In this case, the UE always determines a PUSCH transmitted in a serving cell that is an HD slot in preference to a PUSCH transmitted in a serving cell that is an FD slot as a PUSCH on which the UE multiplexes and transmits the UCI. Thereafter, if there are a plurality of PUSCHs having the same priority (that is, if there are a plurality of PUSCHs transmitted in a serving cell that is an HD slot, or if there is no PUSCH transmitted in a serving cell that is an HD slot and there are only a plurality of PUSCHs transmitted in a serving cell that is an FD slot), the UE determines a PUSCH transmission on which the UE multiplexes and transmits the UCI according to existing priority rules (that is, the first priority to the fifth priority).

As another example, the PUSCH transmitted in the serving cell that is an HD slot may be (always) prioritized over the PUSCH transmitted in the serving cell that is an FD slot before the step of 'PUSCHs on serving cell with smaller serving cell index > PUSCHs on serving cell with larger serving cell index' corresponding to the 'fourth priority'. That is, the rule (that is, priority of the HD cell) may be applied before the 'fourth priority'.

The UE determines, according to the 'third priority', a PUSCH scheduled by a dynamic grant (for example, DCI format 0_0, DCI format 0_1, DCI format 0_2, DCI format 0_3) (hereinafter, this may be referred to as a dynamic grant PUSCH) in preference to a PUSCH configured by 'ConfiguredGrantConfig' or 'semiPersistentOnPUSCH' (that is, a semi-static PUSCH) as a PUSCH on which the UE multiplexes and transmits the UCI. Thereafter, if there are a plurality of PUSCHs having the same priority (that is, if there are a plurality of dynamic grant PUSCHs, or if there is no dynamic grant PUSCH and there are a plurality of PUSCHs configured by 'ConfiguredGrantConfig' or 'semiPersistentOnPUSCH'), a PUSCH transmitted in a serving cell that is an HD slot is determined in preference to a PUSCH transmitted in a serving cell that is an FD slot as a PUSCH on which the UE multiplexes and transmits the UCI. Thereafter, if there are a plurality of PUSCHs having the same priority, the UE determines a PUSCH transmission on which the UE multiplexes and transmits the UCI according to the existing 'fourth priority' and subsequent priority rules.

Generalizing this, if a priority according to which a PUSCH transmitted in a serving cell that is an HD slot is preferentially selected over a PUSCH transmitted in a serving cell that is an FD slot (that is, the above-described priority of the HD cell) is defined as an N-th priority, by additionally applying the N-th priority to a plurality of PUSCHs for which the 'first priority' to the '(N-1)-th priority' are all the same, UCI multiplexing transmission may be performed by preferentially selecting a PUSCH transmitted in a serving cell that is an HD slot from among the plurality of PUSCHs.

Additionally/independently, in the present disclosure, the UE may determine/judge a PUSCH on which the UE multiplexes and transmits UCI by giving priority to a PUSCH transmitted in symbols operating in HD.

Specifically, if the UE transmits UCI in slot m and there are a plurality of PUSCH transmissions overlapping on a time axis with a PUCCH resource through which the UE transmits the UCI, in order to determine a PUSCH on which the UCI is multiplexed and transmitted, the UE gives priority to a PUSCH transmitted in a resource composed of HD symbols over a PUSCH transmitted in a resource composed of FD symbols or including an FD symbol. That is, the UE determines, as a PUSCH on which the UE multiplexes and transmits the UCI, a PUSCH transmitted in a resource composed of HD symbols in preference to a PUSCH transmitted in a resource composed of FD symbols or including an FD symbol.

This rule may be applied before/after a specific one of the plurality of priority steps corresponding to Step 2, that is, for determining one PUSCH transmission on which the UCI is multiplexed and transmitted.

As an example, a PUSCH transmitted in a serving cell that is an HD slot may always be prioritized over a PUSCH transmitted in a serving cell that is an FD slot before the step of 'Earlier PUSCH transmission > later PUSCH transmission' corresponding to the 'fifth priority'. That is, the rule (that is, priority of the HD cell) may be applied before the 'fifth priority'.

In this case, the UE determines, according to the 'fourth priority', a PUSCH in a serving cell having a smaller serving cell index in preference to a PUSCH in a serving cell having a larger serving cell index as a PUSCH on which the UE multiplexes and transmits the UCI. Thereafter, if there are a plurality of PUSCHs having the same priority (that is, if there are a plurality of PUSCHs in the same serving cell), the UE determines a PUSCH transmitted in a resource composed of HD symbols in preference to a PUSCH transmitted in a resource composed of FD symbols or including an FD symbol as a PUSCH on which the UE multiplexes and transmits the UCI. Thereafter, if there are a plurality of PUSCHs having the same priority, the UE determines a PUSCH transmission on which the UE multiplexes and transmits the UCI according to the existing 'fifth priority' and subsequent priority rules.

Generalizing this, in a state in which such a priority (selecting a PUSCH transmitted in a resource composed of HD symbols in preference to a PUSCH transmitted in a resource composed of FD symbols or including an FD symbol) is additionally defined as an N-th priority, by applying the 'N-th priority' to a plurality of PUSCHs for which the 'first priority' to the '(N-1)-th priority' are all the same, UCI multiplexing transmission may be performed by preferentially selecting a PUSCH transmitted by using HD symbols from among the plurality of PUSCHs.

In Proposal 2, an HD slot and an FD slot may more specifically mean the following.

An HD slot may mean a slot in which all symbols in the slot are symbols operating in HD. On the other hand, an FD slot may mean a slot in which all symbols in the slot are symbols operating in FD, or may mean a slot in which at least one symbol in the slot is a symbol operating in FD.

Alternatively, an HD slot may mean a slot in which symbol resources constituting a PUSCH resource in the slot are all composed of symbols operating in HD. On the other hand, an FD slot may mean a slot in which symbol resources constituting a PUSCH resource in the slot are all symbols operating in FD, or may mean a slot in which, with respect to symbol resources through which the PUSCH is transmitted in the slot, at least one symbol is a symbol operating in FD.

In the present disclosure, a symbol/slot operating in HD may mean a symbol/slot for which the UE is semi-statically configured by the base station such that a cell operates in HD. In the present disclosure, a symbol/slot operating in FD may mean a symbol/slot for which the UE is semi-statically configured by the base station such that a cell operates in FD. Thereafter, if the UE is dynamically indicated by the base station that a specific symbol/slot resource operates in HD or FD, the UE may determine a slot through which the UCI is transmitted by considering only semi-statically indicated information.

Additionally, the proposed method may be applied when all or some of the following conditions are satisfied.

The UE may apply the proposal only when whether the operation is applied is indicated by the network through RRC, MAC-CE, DCI signaling, or the like.

The UE may differently apply the proposed method according to transmitted UCI information. For example, in case of HARQ-ACK and/or SR information, the UE transmits as in an existing operation, and in case of other information, the UE transmits by applying the proposal. This is because, in case of HARQ-ACK information, a transmission bit size is small, and thus the HARQ-ACK information is likely to be transmitted relatively reliably even in an FD operation resource.

Alternatively, for example, in case of HARQ-ACK information, the proposal may be applied, and in case of the remaining information, transmission may be performed as in an existing operation.

The UE may differently apply the proposed method according to a bit size/length of transmitted UCI information. For example, if a bit length constituting the UCI to be transmitted by the UE is equal to or less than L bits, the UE transmits by applying the proposal, and if the bit length is greater than L bits, the UE may transmit as in an existing operation. The value L may be fixed as a specific value and defined in a standard specification. Alternatively, the value of L may be a value indicated for the UE by the network through RRC, MAC-CE, and/or DCI signaling, or the like.

According to the proposal of the present disclosure, the UE may operate as follows.

The UE determines a time resource in which each serving cell operates in HD and a time resource in which each serving cell operates in FD based on configuration information from the base station.

Thereafter, when the UE transmits UCI in a specific slot m, the UE determines a specific PUCCH resource A through which the UCI is transmitted.

If there is a PUSCH resource overlapping the PUCCH resource A on a time axis, the UE determines the PUSCH resource as a PUSCH resource through which the UCI is transmitted. If there are a plurality of PUSCH resources overlapping the PUCCH resource A on a time axis, the UE determines a PUSCH resource through which the UCI is transmitted by using the proposed method as described above.

Thereafter, the UE multiplexes and transmits the UCI to the base station through the PUSCH resource determined as described above. The UE does not transmit the UCI through the PUCCH resource A.

According to the proposal of the present disclosure, the base station may operate as follows.

The base station determines/configures, for each serving cell, a resource in which a cell operates in FD and/or a resource in which a cell operates in HD, and signals, to the UE, information on a time resource in which the cell operates in HD and/or a time resource in which the cell operates in FD.

The base station may request UCI information, such as HARQ-ACK, CSI, and SR, from the UE.

When the base station receives the UCI information from the UE through the PUCCH in slot m, the base station determines a PUCCH or PUSCH resource through which the UCI is transmitted by using the proposed method as described above.

Thereafter, the base station receives the UCI from the UE in slot m through the PUCCH or PUSCH resource determined as described above.

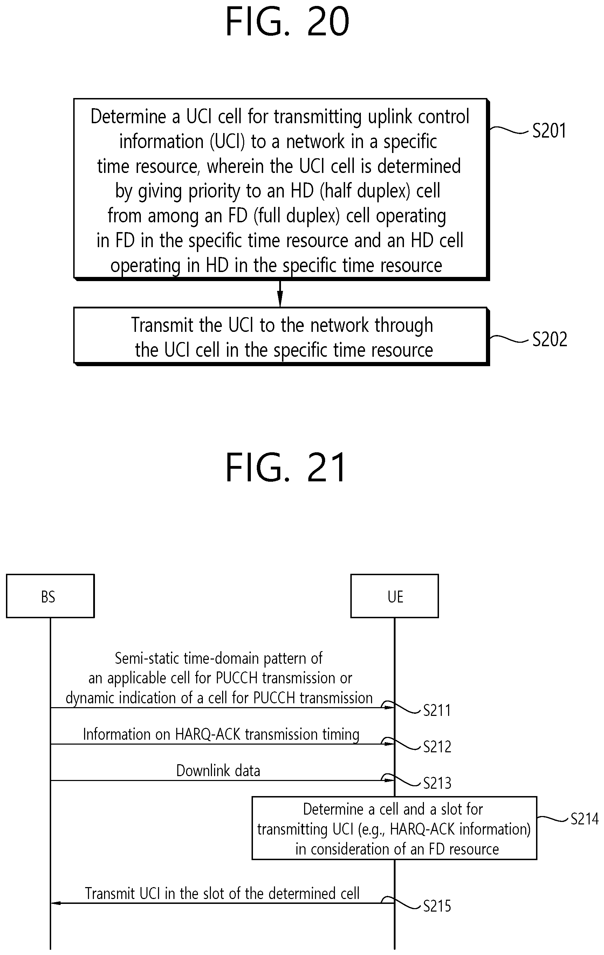

FIG. 20 illustrates a UCI transmission method of a UE.

Referring to FIG. 20, a UE determines a UCI cell for transmitting uplink control information (UCI) to a network in a specific time resource, and determines the UCI cell by giving priority to an HD cell from among an FD cell operating in FD(full duplex) (that is, composed of an FD resource in the specific time resource) in the specific time resource and an HD cell operating in HD(half duplex) (that is, composed of an HD resource in the specific time resource) in the specific time resource (S201).

Hereinafter, an FD cell may mean a cell operating in FD (composed of an FD resource) in a time resource in which the UCI should be transmitted, and an HD cell may mean a cell operating in HD (composed of an HD resource) in a time resource in which the UCI should be transmitted.

The UE transmits the UCI to the network through the UCI cell in the specific time resource (S202).

As described in Proposal 1, the UCI may be transmitted through a physical uplink control channel (PUCCH) resource of the UCI cell.

For example, if there are a first cell and a second cell capable of transmitting the UCI at a specific time point, and one of the first cell and the second cell is the FD cell and the other one is the HD cell,
i) a candidate cell for transmitting the UCI may be determined from among the first cell and the second cell based on a semi-static time-domain pattern of an applicable cell for physical uplink control channel (PUCCH) transmission configured by a higher layer, or
ii) dynamic indication of a cell for PUCCH transmission through a PDCCH scheduling the PUCCH transmission.

At this time, if the candidate cell for transmitting the UCI is the FD cell from among the first cell and the second cell, the HD cell may be determined as the UCI cell from among the first cell and the second cell.

The first cell may be a primary cell (PCell), a primary secondary cell (PSCell), or a PUCCH secondary cell (PUCCH SCell), and the second cell may be a PUCCH switching secondary cell (PUCCH sSCell).

As described in Proposal 2, if a physical uplink control channel (PUCCH) resource capable of transmitting the UCI in a specific slot is present in a first cell, and there is at least one physical uplink shared channel (PUSCH) overlapping the PUCCH resource in the specific slot, the UCI is transmitted through one PUSCH from among the at least one PUSCH.

At this time, the UCI is not transmitted through the PUCCH resource overlapping the at least one PUSCH in the specific slot.

If there are a plurality of PUSCHs in the specific slot, a PUSCH including aperiodic channel state information may be determined as a candidate PUSCH for transmitting the UCI. That is, the candidate PUSCH may be determined based on the above-described first priority.

If the candidate PUSCH is present in both the FD cell and the HD cell, the UCI may be transmitted through the candidate PUSCH present in the HD cell. That is, determination according to priority of the HD cell may be performed after determination according to the first priority (or before determination according to the second priority). This has been described in detail with reference to FIG. 19.

If there are a plurality of PUSCHs and there is no PUSCH including aperiodic channel state information, a PUSCH in the earliest slot based on a start of a slot may be determined as a candidate PUSCH capable of transmitting the UCI. That is, the candidate PUSCH may be determined based on the above-described second priority.

If the candidate PUSCH is present in both the FD cell and the HD cell, the UCI may be transmitted through the candidate PUSCH present in the HD cell. That is, determination according to priority of the HD cell may be performed after determination according to the second priority (or before determination according to the third priority).

If there are a plurality of PUSCHs overlapping the PUCCH resource in the earliest slot, and both a semi-static PUSCH and a PUSCH according to a dynamic grant are present, the PUSCH according to the dynamic grant may be determined as a candidate PUSCH for transmitting the UCI. That is, the candidate PUSCH may be determined based on the above-described third priority.

If the candidate PUSCH is present in both the FD cell and the HD cell, the UCI may be transmitted through the candidate PUSCH present in the HD cell. That is, determination according to priority of the HD cell may be performed after determination according to the third priority (or before determination according to the fourth priority).

If there are a plurality of PUSCHs according to the dynamic grant, a PUSCH of a cell having a smallest serving cell index may be determined as a candidate PUSCH for transmitting the UCI. That is, the candidate PUSCH may be determined based on the above-described fourth priority.

If the candidate PUSCH is present in both the FD cell and the HD cell, the UCI may be transmitted through the candidate PUSCH present in the HD cell. That is, determination according to priority of the HD cell may be performed after determination according to the fourth priority (or before determination according to the fifth priority).

According to the method according to the present disclosure, it is possible to prevent the UCI from being transmitted through an FD resource in which a channel state may be worse than a channel state targeted by the base station. Accordingly, even in an FD environment, the UCI may be transmitted reliably. Further, in a wireless communication system in which FD operation and HD operation are mixed, by clearly defining a cell through which the UCI is transmitted, it is also possible to prevent ambiguity from occurring between transmission/reception subjects.

FIG. 21 illustrates signaling and operation between a base station and a UE.

Referring to FIG. 21, the base station transmits, to the UE, a semi-static time-domain pattern of an applicable cell for PUCCH transmission or dynamic indication of a cell for PUCCH transmission (S211).

The base station provides information on HARQ-ACK transmission timing to the UE (S212).

The base station transmits downlink data to the UE (S213).

The UE determines, in consideration of an FD resource, a cell and a slot through which UCI (for example, HARQ-ACK information) is transmitted (S214). The UE may determine a cell through which the UCI is transmitted based on a semi-static time-domain pattern of an applicable cell for PUCCH transmission or dynamic indication of a cell for PUCCH transmission, and may determine a slot through which the UCI is transmitted based on the information on HARQ-ACK transmission timing.

The UE transmits the UCI to the base station in the slot of the determined cell (S215).

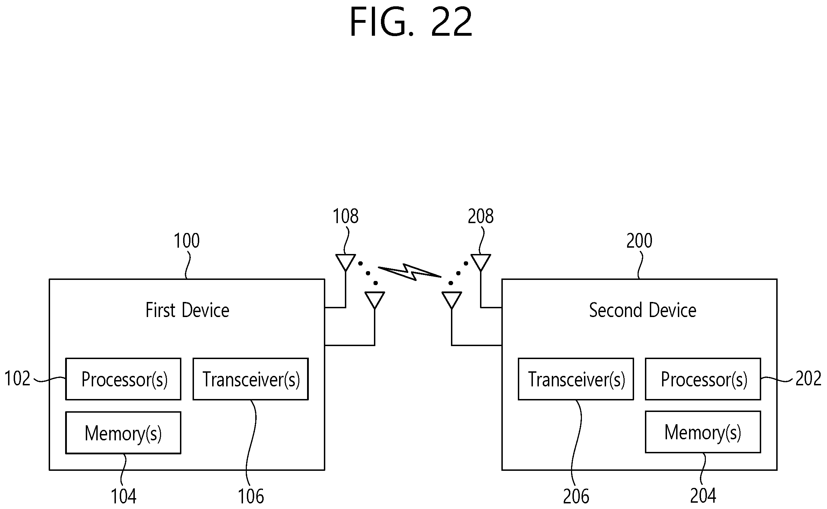

FIG. 22 illustrates a wireless device applicable to the present specification.

Referring to FIG. 22, a first wireless device 100 and a second wireless device 200 may transmit radio signals through a variety of RATs (e.g., LTE and NR).

The first wireless device 100 may include at least one processor 102 and at least one memory 104 and additionally further include at least one transceiver 106 and/or at least one antenna 108. At least one processor 102 (hereinafter simply referred to as a processor) controls at least one memory 104 (hereinafter simply referred to as a memory) and/or at least one transceiver 106 (hereinafter simply referred to as a transceiver), and may be configured to implement the descriptions, functions, procedures, proposals, methods and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processor 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The processor (102) determines a UCI cell for transmitting uplink control information (UCI) to a network, and transmits the UCI to the network through the UCI cell. In this case, the UCI cell is determined by giving priority to an HD cell among an FD cell composed of an FD resource and an HD cell composed of an HD resource. The specific operation has been described with reference to FIGS. 18 to 21.

The second wireless device 200 may include at least one processor 202 and at least one memory 204 and additionally further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

The processor (202) determines a UCI cell for receiving uplink control information (UCI) from a UE, and receives the UCI from the UE through the UCI cell. The UCI cell is determined by giving priority to an HD (half duplex) cell among an FD (full duplex) cell composed of an FD resource and an HD cell composed of an HD resource. The specific operation has been described with reference to FIGS. 18 to 21.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) including instructions executed based on execution by at least one processor performs an operation of determining a UCI cell for transmitting uplink control information (UCI) to a network, and an operation of transmitting the UCI to the network through the UCI cell. In this case, the UCI cell is determined by giving priority to an HD cell among an FD cell composed of an FD resource and an HD cell composed of an HD resource. The specific operation has been described with reference to FIGS. 18 to 21.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

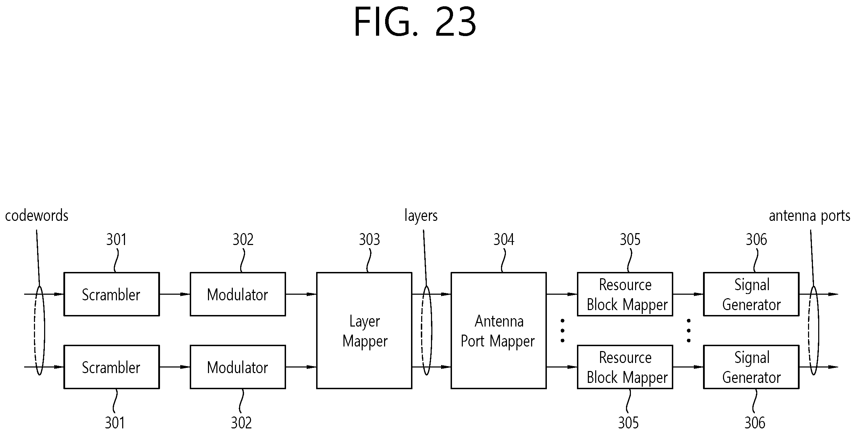

FIG. 23 shows an example of a structure of a signal processing module. Herein, signal processing may be performed in the processors 102 and 202 of FIG. 22.

Referring to FIG. 23, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

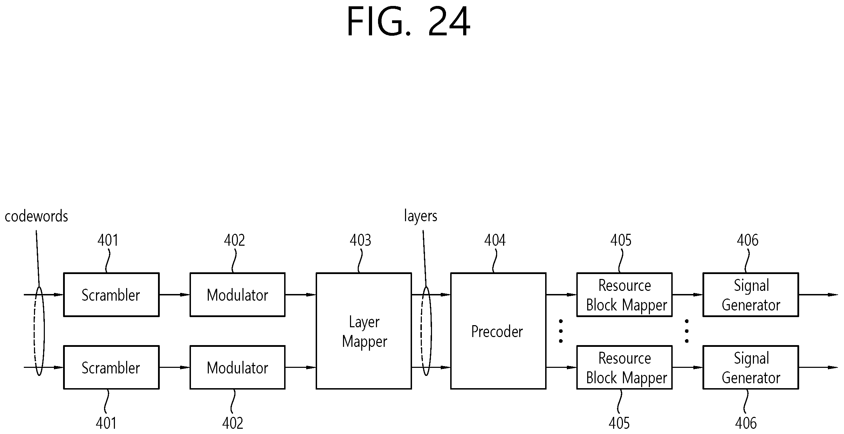

FIG. 24 shows another example of a structure of a signal processing module in a transmitting device. Herein, signal processing may be performed in a processor of a UE/BS, such as the processors 102 and 202 of FIG. 22.

Referring to FIG. 24, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

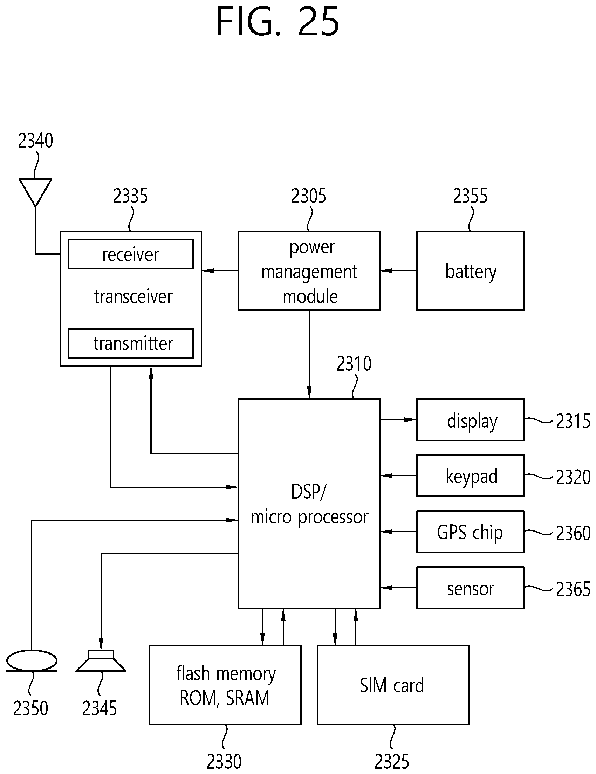

FIG. 25 illustrates an example of a wireless communication device according to an implementation example of the present disclosure.

Referring to FIG. 25, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 25 may be the processors 102 and 202 in FIG. 22.

The memory 2330 is connected to the processor 2310 and stores information related to operations of the processor. The memory may be located inside or outside the processor and connected to the processor through various techniques such as wired connection and wireless connection. The memory 2330 in FIG. 25 may be the memories 104 and 204 in FIG. 22.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

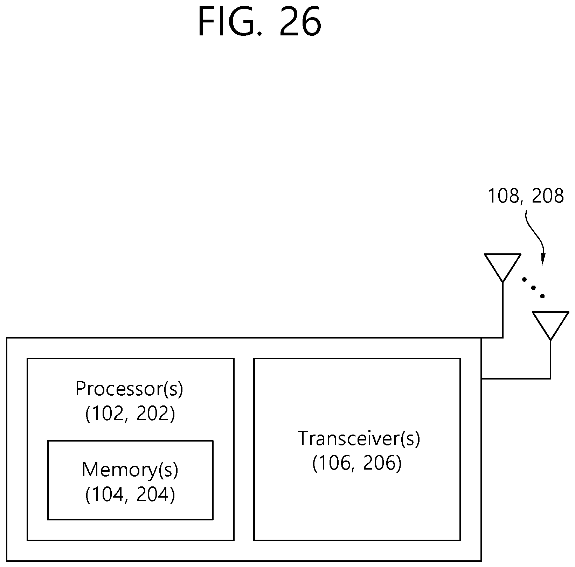

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 25 may be the transceivers 106 and 206 in FIG. 26.

Although not shown in FIG. 25, various components such as a camera and a universal serial bus (USB) port may be additionally included in the UE. For example, the camera may be connected to the processor 2310.

FIG. 25 is an example of implementation with respect to the UE and implementation examples of the present disclosure are not limited thereto. The UE need not essentially include all the components shown in FIG. 25. That is, some of the components, for example, the keypad 2320, the GPS chip 2360, the sensor 2365 and the SIM card 2325 may not be essential components. In this case, they may not be included in the UE.

FIG. 26 shows another example of a wireless device.

Referring to FIG. 26, the wireless device may include at least one processor 102 and 202, at least one memory 104 and 204, at least one transceiver 106 and 206 and one or more antennas 108 and 208.

The example of the wireless device described in FIG. 26 is different from the example of the wireless device described in FIG. 22 in that the processors 102 and 202 and the memories 104 and 204 are separated in FIG. 22 whereas the memories 104 and 204 are included in the processors 102 and 202 in the example of FIG. 26. That is, the processor and the memory may constitute one chipset.

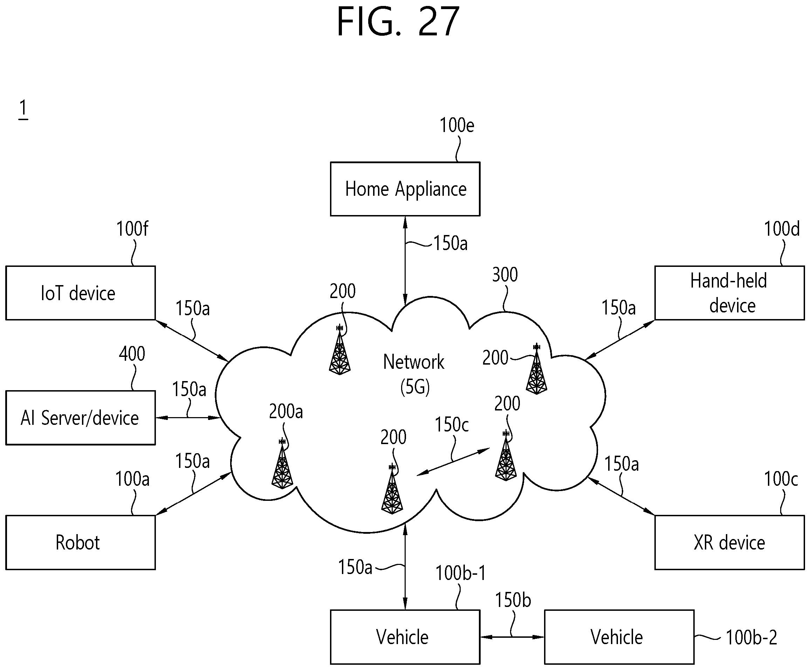

FIG. 27 illustrates a communication system 1 applied to the present specification.

Referring to FIG. 27, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a, 150b or 150c. For example, the wireless communication/connections 150a, 150b or 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 6. For convenience of explanation, among the frequency ranges that are used in an NR system, FR1(frequency range 1) may mean a "sub 6GHz range", and FR2(frequency range 2) may mean an "above 6GHz range" and may also be referred to as a millimeter wave (mmW).

**[Table 6]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 7 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 7]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method, comprising:
determining, by a user equipment (UE), a UCI cell for transmitting uplink control information (UCI) to a network in a specific time resource; and
transmitting, by the UE, the UCI to the network through the UCI cell in the specific time resource,
wherein the UCI cell is determined by giving priority to a half duplex (HD) cell from among a full duplex (FD) cell operating in FD in the specific time resource and the HD cell operating in HD in the specific time resource.

2. The method of claim 1, wherein the UCI is transmitted through a physical uplink control channel (PUCCH) resource of the UCI cell.

3. The method of claim 1, wherein, based on there being a first cell and a second cell capable of transmitting the UCI in the specific time resource, and one of the first cell and the second cell being the FD cell and the other one being the HD cell, a candidate cell for transmitting the UCI is determined from among the first cell and the second cell based on i) a semi-static time-domain pattern of an applicable cell for physical uplink control channel (PUCCH) transmission, the semi-static time-domain pattern being configured by a higher layer, or ii) dynamic indication for a cell for PUCCH transmission through a PDCCH scheduling the PUCCH transmission.

4. The method of claim 3, wherein, based on the candidate cell for transmitting the UCI being the FD cell from among the first cell and the second cell, the HD cell from among the first cell and the second cell is determined as the UCI cell.

5. The method of claim 3, wherein the first cell is a primary cell (PCell), a primary secondary cell (PSCell), or a PUCCH secondary cell (PUCCH SCell), and the second cell is a PUCCH switching secondary cell (PUCCH sSCell).

6. The method of claim 1, wherein, based on a physical uplink control channel (PUCCH) resource capable of transmitting the UCI in a specific slot being in a first cell, and there being at least one physical uplink shared channel (PUSCH) overlapping the PUCCH resource in the specific slot, the UCI is transmitted through one PUSCH from among the at least one PUSCH.

7. The method of claim 6, wherein the UCI is not transmitted through the PUCCH resource overlapping the at least one PUSCH in the specific slot.

8. The method of claim 6, wherein, based on there being a plurality of PUSCHs in the specific slot, a PUSCH including aperiodic channel state information is determined as a candidate PUSCH for transmitting the UCI.

9. The method of claim 8, wherein, based on the candidate PUSCH being in both the FD cell and the HD cell, the UCI is transmitted through the candidate PUSCH in the HD cell.

10. The method of claim 6, wherein, based on there being a plurality of the PUSCHs and there being no PUSCH including aperiodic channel state information, a PUSCH of an earliest slot based on a start of a slot is determined as a candidate PUSCH capable of transmitting the UCI.

11. The method of claim 10, wherein, based on the candidate PUSCH being in both the FD cell and the HD cell, the UCI is transmitted through the candidate PUSCH in the HD cell.

12. The method of claim 10, wherein, based on there being a plurality of PUSCHs overlapping the PUCCH resource in the earliest slot, and both a semi-static PUSCH and a PUSCH according to a dynamic grant being present, the PUSCH according to the dynamic grant is determined as a candidate PUSCH for transmitting the UCI.

13. The method of claim 12, wherein, based on the candidate PUSCH being in both the FD cell and the HD cell, the UCI is transmitted through the candidate PUSCH in the HD cell.

14. The method of claim 12, wherein, based on there being a plurality of PUSCHs according to the dynamic grant, a PUSCH of a cell having a smallest serving cell index is determined as a candidate PUSCH for transmitting the UCI.

15. The method of claim 14, wherein, based on the candidate PUSCH being in both the FD cell and the HD cell, the UCI is transmitted through the candidate PUSCH in the HD cell.

16. A user equipment (UE), comprising:
at least one transceiver;
at least one memory; and
at least one processor operably coupled to the at least one memory and the at least one transceiver,
wherein the at least one memory includes instructions executed by the at least one processor to perform operations,
wherein the operations comprise:
determining a UCI cell for transmitting uplink control information (UCI) to a network in a specific time resource; and
transmitting the UCI to the network through the UCI cell in the specific time resource,
wherein the UCI cell is determined by giving priority to a half duplex (HD) cell from among a full duplex (FD) cell operating in FD in the specific time resource and the HD cell operating in HD in the specific time resource.

17. The UE of claim 16, wherein the UCI is transmitted through a physical uplink control channel (PUCCH) resource of the UCI cell.

18. The UE of claim 16, wherein, based on there being a first cell and a second cell capable of transmitting the UCI in the specific time resource, and one of the first cell and the second cell being the FD cell and the other one being the HD cell, a candidate cell for transmitting the UCI is determined from among the first cell and the second cell based on i) a semi-static time-domain pattern of an applicable cell for physical uplink control channel (PUCCH) transmission, the semi-static time-domain pattern being configured by a higher layer, or ii) dynamic indication for a cell for PUCCH transmission through a PDCCH scheduling the PUCCH transmission.

19. The UE of claim 18, wherein, based on the candidate cell for transmitting the UCI being the FD cell from among the first cell and the second cell, the HD cell from among the first cell and the second cell is determined as the UCI cell.

20. The UE of claim 18, wherein the first cell is a primary cell (PCell), a primary secondary cell (PSCell), or a PUCCH secondary cell (PUCCH SCell), and the second cell is a PUCCH switching secondary cell (PUCCH sSCell).

21. The UE of claim 16, wherein, based on a physical uplink control channel (PUCCH) resource capable of transmitting the UCI in a specific slot being in a first cell, and there being at least one physical uplink shared channel (PUSCH) overlapping the PUCCH resource in the specific slot, the UCI is transmitted through one PUSCH from among the at least one PUSCH.

22. The UE of claim 21, wherein the UCI is not transmitted through the PUCCH resource overlapping the at least one PUSCH in the specific slot.

23. The UE of claim 21, wherein, based on there being a plurality of PUSCHs in the specific slot, a PUSCH including aperiodic channel state information is determined as a candidate PUSCH for transmitting the UCI.

24. The UE of claim 23, wherein, based on the candidate PUSCH being in both the FD cell and the HD cell, the UCI is transmitted through the candidate PUSCH in the HD cell.

25. The UE of claim 21, wherein, based on there being a plurality of the PUSCHs and there being no PUSCH including aperiodic channel state information, a PUSCH of an earliest slot based on a start of a slot is determined as a candidate PUSCH capable of transmitting the UCI.

26. The UE of claim 25, wherein, based on the candidate PUSCH being in both the FD cell and the HD cell, the UCI is transmitted through the candidate PUSCH in the HD cell.

27. The UE of claim 25, wherein, based on there being a plurality of PUSCHs overlapping the PUCCH resource in the earliest slot, and both a semi-static PUSCH and a PUSCH according to a dynamic grant being present, the PUSCH according to the dynamic grant is determined as a candidate PUSCH for transmitting the UCI.

28. The UE of claim 27, wherein, based on the candidate PUSCH being in both the FD cell and the HD cell, the UCI is transmitted through the candidate PUSCH in the HD cell.

29. The UE of claim 27, wherein, based on there being a plurality of PUSCHs according to the dynamic grant, a PUSCH of a cell having a smallest serving cell index is determined as a candidate PUSCH for transmitting the UCI.

30. The UE of claim 29, wherein, based on the candidate PUSCH being in both the FD cell and the HD cell, the UCI is transmitted through the candidate PUSCH in the HD cell.

31. An apparatus, comprising:
at least one memory; and
at least one processor operably coupled to the at least one memory,
wherein the at least one memory includes instructions executed by the at least one processor to perform operations,
wherein the operations comprise:
determining a UCI cell for transmitting uplink control information (UCI) to a network in a specific time resource; and
transmitting the UCI to the network through the UCI cell in the specific time resource,
wherein the UCI cell is determined by giving priority to a half duplex (HD) cell from among a full duplex (FD) cell operating in FD in the specific time resource and the HD cell operating in HD in the specific time resource.

32. A computer readable medium (CRM) including instructions based on being executed by at least one processor, performing:
determining a UCI cell for transmitting uplink control information (UCI) to a network in a specific time resource; and
transmitting the UCI to the network through the UCI cell in the specific time resource,
wherein the UCI cell is determined by giving priority to a half duplex (HD) cell from among a full duplex (FD) cell operating in FD in the specific time resource and the HD cell operating in HD in the specific time resource.

33. A method, comprising:
determining, by a base station, a UCI cell for receiving uplink control information (UCI) from a user equipment (UE) in a specific time resource; and
receiving, by the base station, the UCI from the UE through the UCI cell in the specific time resource,
wherein the UCI cell is determined by giving priority to a half duplex (HD) cell from among a full duplex (FD) cell operating in FD in the specific time resource and the HD cell operating in HD in the specific time resource.

34. A base station, comprising:
at least one transceiver;
at least one memory; and
at least one processor operably coupled to the at least one memory and the at least one transceiver,
wherein the at least one memory includes instructions executed by the at least one processor to perform operations,
wherein the operations comprise:
determining a UCI cell for receiving uplink control information (UCI) from a user equipment (UE) in a specific time resource; and
receiving the UCI from the UE through the UCI cell in the specific time resource,
wherein the UCI cell is determined by giving priority to a half duplex (HD) cell from among a full duplex (FD) cell operating in FD in the specific time resource and the HD cell operating in HD in the specific time resource.
